(19) Europäisches Patentamt
European Patent Office
Office européen des brevets

(11) EP 0 878 028 B1

(12) # EUROPÄISCHE PATENTSCHRIFT

(45) Veröffentlichungstag und Bekanntmachung des Hinweises auf die Patenterteilung:
**22.09.1999 Patentblatt 1999/38**

(21) Anmeldenummer: **97904358.5**

(22) Anmeldetag: **31.01.1997**

(51) Int Cl.[6]: **H01M 4/88**, H01M 8/14

(86) Internationale Anmeldenummer:
**PCT/EP97/00422**

(87) Internationale Veröffentlichungsnummer:
**WO 97/28571 (07.08.1997 Gazette 1997/34)**

(54) **VERFAHREN ZUR HERSTELLUNG EINER ELEKTRODE FÜR EINE SCHMELZKARBONAT-BRENNSTOFFZELLE, NACH DEM VERFAHREN HERGESTELLTE ELEKTRODE UND SCHMELZKARBONAT-BRENNSTOFFZELLE MIT EINER NACH DEM VERFAHREN HERGESTELLTEN ELEKTRODE**

PROCESS FOR THE PRODUCTION OF AN ELECTRODE FOR A FUSED CARBONATE FUEL CELL, ELECTRODE PRODUCED ACCORDING TO THIS PROCESS AND FUSED CARBONATE FUEL CELL PROVIDED WITH AN ELECTRODE PRODUCED ACCORDING TO THIS PROCESS

PROCEDE DE PRODUCTION D'UNE ELECTRODE POUR PILE A COMBUSTIBLE A CARBONATE FONDU, ELECTRODE PRODUITE SELON CE PROCEDE ET PILE A COMBUSTIBLE A CARBONATE FONDU POURVUE D'UNE ELECTRODE PRODUITE SELON CE PROCEDE

(84) Benannte Vertragsstaaten:
**DE GB IT NL**

(30) Priorität: **03.02.1996 DE 19603918**

(43) Veröffentlichungstag der Anmeldung:
**18.11.1998 Patentblatt 1998/47**

(73) Patentinhaber: **MTU MOTOREN- UND TURBINEN-UNION FRIEDRICHSHAFEN GMBH**
**88040 Friedrichshafen (DE)**

(72) Erfinder:
- **BISCHOFF, Manfred**
  **D-83620 Feldkirchen (DE)**
- **ROHLAND, Bernd**
  **D-89081 Ulm (DE)**
- **JANTSCH, Uwe**
  **D-06366 Köthen (DE)**

(74) Vertreter: **Winter, Josef**
**MTU Motoren- und Turbinen-Union Friedrichshafen GmbH**
**Patentabteilung ZJXP**
**88040 Friedrichshafen (DE)**

(56) Entgegenhaltungen:
**EP-A- 0 661 767** **WO-A-96/08050**

- **Patent Abstracts of Japan, Band 9, Nr 274(E-354); & JP,A,60117566 (MATSUSHITA DENKI SANGYO K.K.), 1985-06-25**
- **J. ELECTROCHEM. SOC., Band 141, Nr. 11, November 1994, Carina Lagergren et al, "Synthesis and Performance of LiCoO2 Cathodes for the Molten Carb onate Fuel Cell"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung bezieht sich auf ein Verfahren zur Herstellung einer Elektrode für eine Schmelzkarbonat-Brennstoffzelle, auf eine nach dem Verfahren hergestellte Elektrode und auf eine Schmelzkarbonat-Brennstoffzelle mit einer nach dem Verfahren hergestellten Elektrode.

Es ist bekannt, Kathoden für Schmelzkarbonat-Brennstoffzellen aus Lithiumcobaltit ($LiCo\ O_2$) zu erzeugen. Zur Herstellung derartiger Kathoden wird Lithiumcobaltit-Pulver mit einem Bindemittel vermischt. Ein Dispergiermittel kann dem Bindemittel beigemischt werden. Aus der Mischung wird eine Folie gebildet, die in Platten geteilt wird. Die Platten werden in einer Luft-Kohlendioxid-Atmosphäre bei hohen Temperaturen gesintert. Lithiumcobaltit wird durch Reaktion von Cobalt - mit Lithiumverbindungen hergestellt (EP 0 473 236 A2).

Weiterhin ist es bekannt, Lithiumkobaltit durch Reaktion von Cobaltoxid (Eisenoxid) mit Lithiumhydroxiddampf in einer Hochtemperaturreaktion als Pulver herzustellen. Dieses Pulver wird mittels keramischer Sinterverfahren zu bruchempfindlichen Elektrodenplatten geringer Größe verarbeitet (JP 0636, 770).

Schließlich ist es bekannt, aus einer duktilen Cobaltschicht, deren Poren mit Lithiumcarbonat gefüllt sind, durch Oxidation eine Lithiumcobaltitschicht zu bilden. Die Umsetzung zur Lithiumcobaltit-Schicht geschieht vorzugsweise nach der Vereinigung mit einer Matrix-Schicht und einer Anoden-Schicht und nach der Einsetzung zusammen mit Stromkollektorplatten in einen Zellenhalter einer Brennstoffzelle während einer Anfahrphase der Brennstoffzelle. Die Struktur der so hergestellten Lithiumcobaltit-Elektrodenplatte entspricht der Struktur der ursprünglichen porösen Cobaltelektrodenplatte, die einen relativ großen Polarisationswiderstand aufweist (DE 43 03 136 C1).

Der Erfindung liegt das Problem zugrunde, ein Verfahren zur Herstellung einer porösen Lithiumcobaltit-Elektrodenplatte mit großer innerer Oberfläche und geringem Polarisationswiderstand anzugeben und eine nach dem Verfahren hergestellte Elektrodenplatte bereitzustellen.

Das Problem wird für das Verfahren erfindungsgemäß dadurch gelöst, daß Cobaltmetall- und Lithiumkarbonatpulver homogen miteinander vermischt werden, daß danach aus der Mischung Folien und aus den Folien Platten erzeugt werden, die zu porösen Elektrodenvorläuferplatten gesintert werden, und daß anschließend die Elektrodenvorläuferplatten bei einer Temperatur zwischen 400°C und 488°C strömender Luft für mehrere Stunden ausgesetzt werden, bis die Elektrodenvorläuferplatten in Lithiumcobaltit-Elektrodenplatten mit extrem großer innerer Oberfläche umgewandelt sind. Bei dem erfindungsgemäßen Verfahren läuft eine strukturbestimmende Bildungsreaktion von Lithiumkobaltit in mehreren Stufen ab. Zunächst findet in der porösen Cobalt/Lithiumkarbonat-Vorläuferelektrodenplatte in der Luftatmosphäre eine Oxidation von Cobalt statt. Weiterhin wird an den Kontaktstellen von Cobaltoxid mit Lithiumkarbonat Lithiumkobaltit und Lithiumoxid unter Abgabe von Kohlendioxid gebildet, das mit der strömenden Luft abgeführt wird. Lithiumoxid geht wegen seines hohen Dampfdrucks in die Gasphase über, in der es an nicht mit Lithiumkarbonat kontaktiertem Cobaltoxid zu Lithiumcobaltit abreagiert.

Vorzugsweise wird die Temperatur während der Bildung von Lithiumkobaltit zwischen 420°C und 480°C gehalten. Es hat sich gezeigt, daß in diesem Temperaturbereich die oben beschriebenen Reaktionen unter Einwirkung des Luftsauerstoffs unter günstigen Bedingungen ablaufen.

Insbesondere wird die Menge der zugeführten Luft und die Strömungsgeschwindigkeit der Luft so eingestellt, daß der Kohlendioxidgehalt der Luft nicht größer als etwa 1 % ist und die Dauer der Einwirkung der Luft etwa 10 Stunden dauert. Unter diesen Bedingungen wird eine aus Lithiumcobalit bestehende Elektrode mit sehr großer innerer Oberfläche von 2 bis $6m^2/g$ erhalten, die kein Lithiumkarbonat mehr aufweist.

Die Reaktionen, die bei dem oben beschriebenen Verfahren während der verschiedenen Verfahrensphasen ablaufen, sind nachstehend detailliert angegeben:

### Mechanismus der Festkörper - Gas - Reaktion (400°C - 488°C)

Oxidation von Cobalt:

$$Co + \tfrac{2}{3}\,O_2 \rightarrow \tfrac{1}{3}Co_3O_4$$

Festkörperreaktion an den Kontaktstellen Cobaltoxid / Lithiumkarbonat:

$$\tfrac{1}{3}Co_3O_4 + Li_2CO_3 + \tfrac{1}{12}O_2 \rightarrow LiCoO_2 + CO_2 + \tfrac{1}{2}Li_{2.}O_{(fest)}$$

$$Li_2O_{(fest)} \rightarrow Li_2O_{(gas)}$$

Gasdiffusion von $Li_2O_{(gas)}$:

$$Li_2O_{(gas)}\ (Reaktionsort1) \rightarrow Diffusion \rightarrow Li_2O_{(gas)}\ (Reaktionsort2)$$

Gas - Fest - Reaktion am Reaktionsort 2:

$$a)\ \tfrac{1}{3}Co_3O_4 + Li_2O_{(gas)} + \tfrac{1}{12}O_2 \rightarrow LiCoO_2$$

Bei einem nur geringen Kohlendioxidanteil in der Luft, der einen Wert von 1 % nicht übersteigt, erhält man eine aus Lithiumcobalit bestehende Elektrode mit sehr großer innerer Oberfläche von 2 - 6$m^2$/g, die nach 10 Stunden kein $Li_2CO_3$ mehr aufweist. Die Struktur, die während dieses kombinierten Oxidations- und Formierprozesses gebildet wird, bleibt bei Einsatz der Elektrode in einer Schmelzkarbonat-Brennstoffzelle erhalten.

Durch Erhöhung des $CO_2$ - Gehaltes in der Luft wird die $Li_2O$-Diffusion zu nicht mit $Li_2CO_3$ Partikeln kontaktierten, oxidierten Co-Partikeln behindert, da sich aus $Li_2O$ und $CO_2$ wieder $Li_2CO_3$ bildet. Dadurch verringert sich mit steigendem $CO_2$-Gehalt in der Luft die $LiCoO_2$-Bildungsgeschwindigkeit, und die gewünschte Feinstruktur mit großer innerer Oberfläche kann sich nicht ausbilden.

Durch Verwendung von befeuchteter Luft mit Wasserdampfgehalten > 2 % kann der Formierprozeß zur Bildung einer großen inneren Oberfläche > 2 $m^2$/g auch mit $CO_2$-Gehalten > 1 % in der Formiergasatmosphäre durchgeführt werden. In diesem Fall erfolgt die Bildung von $LiCoO_2$ durch Reaktion von oxidiertem Cobalt und Lithiumhydroxid nach folgendem Mechanismus.

LiCoO2- Bildung in Gegenwart von Wasserdampf:

$$Li_2CO_3 + H_2O_{(g)} \rightarrow 2LiOH_{(g)} + CO_2$$

$$Li_2O_{(s,g)} + H_2O_{(g)} \rightarrow 2LiOH_{(g)}$$

$$LiOH_{(g)}\ (Reaktionsort\ 1) \xrightarrow{Diffusion} LiOH_{(g)}\ (Reaktionsort\ 2)$$

$$\tfrac{1}{3}Co_3O_4 + LiOH_{(g)} + \tfrac{1}{12}O_2 \rightarrow LiCoO_2 + \tfrac{1}{2}H_2O_{(g)}$$

Eine weitere Erhöhung des Wasserdampfgehaltes über 2 % führt nicht zu einer weiteren Beschleunigung der Reaktion.

Das erfindungsgemäße Verfahren kann nach dem Einsetzen der Elektrodenvorläuferplatten in einen Ofen unter den oben beschriebenen Bedingungen durchgeführt werden, wobei die hergestellten Lithiumcobaltit-Elektroden nach dem Abkühlen dem Ofen entnommen und danach mit einer mit dem Schmelzelektrolyten getränkten Matrix-Schicht und einer Anode sowie mit Stromkollektoren zu einer Brennstoffzelle zusammengefügt werden.

Günstig ist es auch, wenn die jeweilige Elektrodenvorläuferplatte mit einer mit Schmelzkarbonat gefüllten Matrix-Schicht zu einer der Brennstoffzelle entsprechenden Schichtanordnung vereinigt wird und danach mit dieser in eine Brennstoffzelle eingebaut wird, wobei das erfindungsgemäße Verfahren nach dem Einbau in der Brennstoffzelle durchgeführt wird. Unter den Bedingungen des erfindungsgemäßen Verfahrens entsteht dabei während einer Anfahrprozedur der Brennstoffzelle die Lithiumcobaltitkathode. Das Lithiumcobaltit kann auch als dünne, festhaftende Schicht auf einer porösen Unterlage aus Nickel, das dabei oxidiert wird, erzeugt werden.

Das nachstehende Beispiel dient der weiteren Erläuterung der Erfindung.

Ausführungsbeispiel

Als Ausgangskomponenten werden feines Cobalt-Pulver, das in einer Korngröße < 3µm und $Li_2CO_3$ - Pulver, das eine Korngöße zwischen 1µm und 10µm hat, in einem Verhältnis von 66gew.%Co und 34gew.% $Li_2CO_3$ unter Zugabe eines in einem nichtwässrigen Lösungsmittel gelösten organischen Bindemittels, eines Weichmachers, und

anderer organischer Zusätze zu einem dickflüssigen Schlicker verarbeitet, der nach dem "Tape casting"-Verfahren zu einer Folie ausgezogen wird. Aus der Folie werden nach dem Trocknungsprozeß Platten hergestellt, die im Schutzgasofen bei einer Temperatur unterhalb des $Li_2CO_3$ - Schmelzpunktes, vorzugsweise bei 650°C, 30 Minuten in reduzierender Atmosphäre gesintert werden. Nach dicser Prozedur besteht ein enger Kontakt zwischen den Co- und den $Li_2CO_3$ - Körnern in den Elektrodenvorläuferplatten. Nach der Sinterung der Platten wird mit einer Rate von 200 Kelvin je Stunde auf 460°C abgekühlt und nach ausreichender Spülung mit Stickstoff auf Luftatmosphäre mit Luftaustausch gewechselt. Bei dieser Temperatur erfolgt innerhalb von 10 Stunden die vollständige Oxidation von Co unter gleichzeitiger Bildung von Lithiumcobaltit aus dem gebildeten Cobalt-Oxid und $Li_2CO_3$ in einer Festkörper- und Gasreaktion. Die so hergestellte Lithiumcobaltit Elektrode hat je nach Bildungsgeschwindigkeit eine extrem große innere Oberfläche, die nach dem Einbau in eine Schmelzkarbonat-Brennstoffzelle und deren Betrieb erhalten bleibt. Die Formiergeschwindigkeit wird bestimmt durch (i) den Gehalt an Kohlendioxid und Wasserdampf und (ii) die Korngröße des Cobalt und des $Li_2CO_3$-Pulvers.

Eine nach dem erfindungsgemäßen Verfahren hergestellte Elektrode hat eine für das Verfahren typische Struktur mit extrem großer innerer Oberfläche. Hieraus beruht ein sehr geringer Polarisierungswiderstand einer entsprechenden Kathode in einer Brennstoffzelle, wodurch deren Leistungsfähigkeit gesteigert wird.

## Patentansprüche

1. Verfahren zur Herstellung einer Elektrode für eine Schmelzkarbonatbrennstoffzelle, wobei Cobaltmetallpulver enthaltende Folien und aus den Folien Platten erzeugt werden, die zu Elektrodenvorläuferplatten gesintert werden, und wobei die Elektrodenvorläuferplatten durch Cobaltoxidation und Lithiumcobaltitbildung in Lithiumcobaltit-Elektrodenplatten umgewandelt werden, dadurch gekennzeichnet, daß Cobaltmetall- und Lithiumkarbonatpulver miteinander vermischt werden, und daß danach aus der Mischung Folien und aus den Folien Platten erzeugt werden, die zu Elektrodenvorläuferplatten gesintert werden, und daß anschließend die Elektrodenvorläuferplatten bei einer Temperatur zwischen 400°C und 488°C strömender Luft ausgesetzt werden, bis die Umwandlung der Elektrodenvorläuferplatten in Lithiumcobaltit-Elektrodenplatten mit extrem großer innerer Oberfläche erfolgt ist.

2. Verfahren nach Anspruch 1, dadurch gekennzeichnet, daß die Temperatur zwischen 420°C und 480°C liegt.

3. Verfahren nach Anspruch 1 oder 2, dadurch gekennzeichnet, daß der Kohlendioxidgehalt der Luft kleiner als ein Prozent ist.

4. Verfahren nach Anspruch 1 oder 2, dadurch gekennzeichnet, daß der Kohlendioxidgehalt der Luft größer 1 % ist und die Luft einen Wasserdampfgehalt größer 2 % hat.

5. Verfahren nach einem oder mehreren der vorhergehenden Ansprüche 1 bis 4, dadurch gekennzeichnet, daß die Elektrodenvorläuferplatten als dünne Schichten auf einer porösen Unterlage aus Nickel abgeschieden werden, und daß die Lithiumkobaltit-Elektroden als festhaftende Schichten auf einer während der Lithiumcobaltitbildung aus dem Nickel entstehenden Nickeloxid-Unterlage erzeugt werden.

6. Verfahren nach einem oder mehreren der vorhergehenden Ansprüche, dadurch gekennzeichnet, daß die Elektrodenvorläuferplatten in einem Ofen der Cobaltoxidation und Lithiumcobaltitbildung ausgesetzt werden, und daß die Lithiumcobaltit-Elektrodenplatten jeweils nach der Abkühlung mit einer mit Schmelzkarbonat gefüllten Matrix-Schicht und einer Anoden-Schicht zu einer der Brennstoffzelle entsprechenden Schichtanordnung vereinigt werden.

7. Verfahren nach einem oder mehreren der vorhergehenden Ansprüche 1 bis 4, dadurch gekennzeichnet, daß die Elektrodenvorläuferplatten jeweils mit einer mit Schmelzkarbonat gefüllten Matrix-Schicht und einer Anoden-Schicht zu einer Schichtanordnung vereinigt werden, die in einer Brennstoffzelle angeordnet wird, und daß die Lithiumcobaltit-Kathodenplatte in einer Anfahrphase unterhalb der Schmelztemperatur des $LiKCO_3$-Schmelzelektrolyten in der Brennstoffzelle erzeugt wird.

## Claims

1. Method for fabricating an electrode for a molten-carbonate fuel cell, which involves foils containing cobalt metal powder being produced and the foils being made into plates which are sintered to produce electrode precursor

plates, and which involves the electrode precursor plates being converted, by cobalt oxidation and formation of lithium cobaltite, into lithium cobaltite electrode plates, characterized in that cobalt metal powder and lithium carbonate powder are mixed together and in that foils are subsequently prepared from the mixture and the foils are made into plates which are sintered to produce electrode precursor plates, and in that the electrode precursor plates are then exposed to flowing air at a temperature of between 400°C and 488°C, until the conversion of the electrode precursor plates into lithium cobaltite electrode plates having an extremely large internal surface area has taken place.

2. Method according to Claim 1, characterized in that the temperature is between 420°C and 480°C.

3. Method according to Claim 1 or 2, characterized in that the carbon dioxide content of the air is less than one per cent.

4. Method according to Claim 1 or 2, characterized in that the carbon dioxide content of the air is greater than 1% and the air has a water vapour content greater than 2%.

5. Method according to one or more of the preceding Claims 1 to 4, characterized in that the electrode precursor plates are deposited as thin layers on a porous substrate made of nickel, and in that the lithium cobaltite electrodes are produced as firmly adhering layers on a nickel oxide substrate which is formed from the nickel during the formation of lithium cobaltite.

6. Method according to one or more of the preceding claims, characterized in that the electrode precursor plates are subjected to the cobalt oxidation and formation of lithium cobaltite in a furnace, and in that the lithium cobaltite electrode plates on each occasion after cooling are combined with a molten-carbonate-filled matrix layer and an anode layer to produce a sandwich structure which corresponds to the fuel cell.

7. Method according to one or more of the preceding Claims 1 to 4, characterized in that the electrode precursor plates in each instance are combined with a molten-carbonate-filled matrix layer and an anode layer to produce a sandwich structure which is arranged in a fuel cell, and in that the lithium cobaltite cathode plate is produced in a start-up phase below the melting temperature of the $LiKCO_3$ molten electrolyte in the fuel cell.

**Revendications**

1. Procédé de production d'une électrode pour une pile à combustible à carbonate fondu, dans lequel on crée des feuilles contenant une poudre de cobalt métallique et des plaques à partir des feuilles, lesquelles plaques sont frittées en plaques de précurseur d'électrodes, et dans lequel les plaques de précurseur d'électrodes sont converties en plaques d'électrodes au cobaltite de lithium par oxydation du cobalt et formation de cobaltite de lithium, caractérisé en ce que l'on mélange l'une avec l'autre une poudre de cobalt métallique et une poudre de carbonate de lithium, en ce qu'ensuite on crée, à partir du mélange de feuilles et à partir des feuilles, des plaques qui sont frittées en plaques de précurseur d'électrodes, et en ce qu'ensuite les plaques de précurseur d'électrodes sont exposées à un flux d'air à une température entre 400°C et 488°C, jusqu'à ce que la conversion des plaques de précurseur d'électrodes en plaques d'électrodes au cobaltite de lithium avec une surface interne extrêmement grande soit effectuée.

2. Procédé selon la revendication 1, caractérisé en ce que la température est située entre 420°C et 480°C.

3. Procédé selon la revendication 1 ou 2, caractérisé en ce que la teneur en dioxyde de carbone de l'air est inférieure à un pour-cent.

4. Procédé selon la revendication 1 ou 2, caractérisé en ce que la teneur en dioxyde de carbone de l'air est supérieure à 1% et que l'air présente une teneur en vapeur d'eau supérieure à 2%.

5. Procédé selon l'une ou plusieurs des revendications précédentes 1 à 4, caractérisé en ce que les plaques de précurseur d'électrodes sont déposées en couches minces sur une sous-couche poreuse en nickel, et en ce que les électrodes au cobaltite de lithium sont créées sous forme de couches adhérant fermement à une sous-couche d'oxyde de nickel produite à partir du nickel pendant la formation du cobaltite de lithium.

6. Procédé selon l'une ou plusieurs des revendications précédentes, caractérisé en ce que les plaques de précurseur

d'électrodes sont exposées à l'oxydation du cobalt et la formation de cobaltite de lithium dans un four, et en ce que les plaques d'électrodes au cobaltite de lithium sont réunies à chaque fois après le refroidissement à une couche de matrice remplie de carbonate fondu et à une couche d'anodes, en un agencement de couche correspondant à la pile à combustible.

**7.** Procédé selon l'une ou plusieurs des revendications précédentes 1 à 4, caractérisé en ce que les plaques de précurseur d'électrodes sont réunies à chaque fois à une couche de matrice remplie de carbonate fondu et à une couche d'anodes, en un agencement de couche qui est disposé dans une pile à combustible, et en ce que la plaque de cathodes au cobaltite de lithium est créée dans la pile à combustible au cours d'une phase de démarrage en dessous de la température de fusion de l'électrolyte de $LiKCO_3$ fondu.